# EUROPÄISCHE PATENTSCHRIFT

(11) **EP 1 760 339 B1**
(45) Veröffentlichungstag und Bekanntmachung des Hinweises auf die Patenterteilung: **28.03.2012**
(21) Anmeldenummer: 06119751.3
(22) Anmeldetag: 30.08.2006
(51) Int. Cl.: F16C 19/38, F16C 33/60

(54) **Lagerring**
Bearing race
Bague de roulement

(30) Priorität: 01.09.2005 DE 102005041400
(43) Veröffentlichungstag der Anmeldung: 07.03.2007
(73) Patentinhaber: Schaeffler Technologies AG & Co. KG, 91074 Herzogenaurach (DE)
(72) Erfinder: Correns, Martin, 90617 Puschendorf (DE); Jansen, Manfred, 91085 Weisendorf (DE); Dehner, Bernd, 97258 Hemmersheim (DE); Weidmann, Achim, 97422 Schweinfurt (DE); Zeidlhack, Rudolf, 97440 Werneck-Eßleben (DE); Markowski, Udo, 97526 Sennfeld (DE); Wieser, Norbert, 42113 Wuppertal (DE); Benninghoven, Gerd, 42281 Wuppertal (DE)

(56) Entgegenhaltungen:
- EP-A- 0 561 437
- WO-A-95/13198
- DE-U1- 20 206 165
- FR-A- 2 372 988
- JP-A- 2007 016 939

## Beschreibung

### Anwendungsgebiet der Erfindung

Die Erfindung betrifft einen Lagerring für ein Wälzlager aus einem Wälzlagerstahl mit einem ringförmigen Teil, das zumindest eine Laufbahn für zugehörige Wälzkörper aufweist, wenigstens einem zugehörigen anderen Teil, das eine Aufnahmeöffnung mit einem Gewindeteil für eine Befestigungsschraube zum Fixieren an einer Anschlusskonstruktion besitzt. Derartige Wälzlager werden immer dann eingesetzt, wenn das Wälzlager direkt mit einer Anschlusskonstruktion verbunden wird und dies über ein Gewinde in einem der Lagerringe erfolgen soll.

### Hintergrund der Erfindung

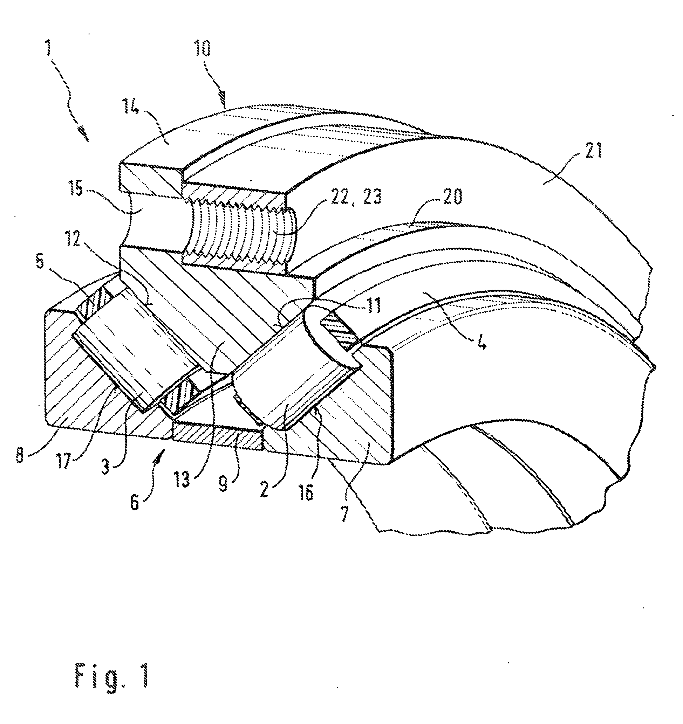

Ein derartiger Lagerring ist aus der DE 202 06 165 U1 vorbekannt. Wie die Figuren 1 und 2 und die zugehörige Beschreibung dieses Dokumentes erkennen lassen, ist ein zu einer Radlagereinheit eines Rennwagens gehörender Lagerring gezeigt, der ein erstes ringförmiges Teil aufweist, in das in bekannter Weise eine Laufbahn für Wälzkörper eingearbeitet ist. Wie besonders gut in Figur 2 gesehen werden kann, schließt sich an das erste ringförmige Teil ein zweites Teil an, das ösenförmig ausgebildet ist. In das zweite Teil ist eine Aufnahmebohrung eingearbeitet, die dazu dient, dass der Lagerring mittels Befestigungselementen an einem benachbarten Bauteil festgelegt werden kann. In der Figur 2 ist nicht dargestellt, dass sich über den Umfang des Lagerringes mehrere, beispielsweise vier zweite Teile erstrecken können. Das erste ringförmige Teil sowie das zweite Teil bestehen aus dem gleichen Material, nämlich aus einem Wälzlagerstahl. Das erste ringförmige Teil weist zumindest auf einem Teil seiner Oberfläche eine Aufkohlung auf, die dazu führt, dass nach Durchführung eines Einsatzhärtungsvorganges das erste Teil eine hohe Härte aufweist. Dem gegenüber ist das zweite Teil von einer Aufkohlung weitgehend freigehalten, so dass auch nach Durchführung der Einsatzhärtung des Lagerringes dieser Teil zäh geblieben ist, jedoch gegenüber dem Zustand vor der Wärmebehandlung eine deutlich erhöhte Zugfestigkeit aufweist. Das ringförmige erste Teil weist demnach eine hohe Härte auf, während sich das zweite Teil durch eine hohe Zähigkeit auszeichnet.

Nachteilig dabei ist, dass vor der Aufkohlung des gesamten Lagerringes der Bereich des zweiten Teils mit einer Schutzpaste bestrichen werden muß. Diese ist erforderlich, um diesen Bereich vor einer Aufkohlung zu schützen. Würde nämlich ein dort vorhandenes Gewinde mit aufgekohlt, so könnte dies beim nachfolgenden Abschrecken in Mitleidenschaft gezogen werden. So könnte das Gewinde durch Härterisse unbrauchbar werden oder durch Verzug zumindest in seiner Qualität beeinträchtigt sein. Darüberhinaus ist das Einsatzhärten ein sehr aufwendiges und damit teures Wärmebehandlungsverfahren.

Ein weiterer derartiger Lagerring ist aus WO95/13198 bekannt. Hier wird der Lagerring an einem mit Gewinden versehenen Flansch befestigt.

### Zusammenfassung der Erfindung

Der Erfindung liegt daher die Aufgabe zugrunde, einen Lagerring der eingangs genannten gattungsgemäßen Art bereitzustellen, der sich in einfacher Weise fertigen lässt und der gleichzeitig eine Fixierung an einem Anschlussteil erlaubt, ohne dass dabei die Gefahr einer Rissbildung im Gewindeteil besteht.

Erfindungsgemäß wird diese Aufgabe mit den Merkmalen des Anspruchs 1 gelöst.

Der entscheidende Vorteil dieser Lösung ist dadurch begründet, dass eine strenge Funktionstrennung zwischen eigentlichem Lagerring und dessen Befestigung an einer Anschlußkonstruktion gegeben ist. Dies hat zur Folge, dass die Laufbahn des Lagerringes durch härtesteigernde Maßnahmen einen gewünschten Verschleißschutz erhält, ohne das zugehörige Befestigungselemente durch nicht erforderlichen Verschleißschutz in ihrer Funktion negativ beeinflußt werden. Durch diese Trennung kann es also nicht mehr vorkommen, dass beispielsweise ein separat ausgebildetes Gewindeteil in seiner Qualität beeinträchtigt ist. Der eigentliche Lagerring weist demnach die gewünschte hohe Härte auf, während das getrennt ausgebildete Gewindeteil relativ weich und zäh ist. Dadurch ist es möglich, den Lagerring in einfacher Weise an einer Anschlußkonstruktion festzulegen, ohne das Gewinde der Gefahr auszusetzen, durch härtesteigernde Maßnahmen Qualitätseinbrüche zu erleiden. Durch die Funktionstrennung zwischen dem eigentlichen Lagerring und dessen Befestigung an der Anschlusskonstruktion werden Positionstoleranzen zwischen Lagerring und Befestigungselement nicht überschritten, da das Befestigungselement aufgrund einer fehlenden Wärmebehandlung keinen die Toleranzen sprengenden Verzug erfährt.

Weitere vorteilhafte Ausgestaltungen der Erfindung sind in den Unteransprüchen 2 bis 4 beschrieben.

Nach einem weiteren Merkmal der Erfindung soll das Gewindeteil Bestandteil eines Ringes sein, der das ringförmige Teil mit seiner inneren Mantelfläche konzentrisch umfasst.

So ist nach Anspruch 2 vorgesehen, dass das Befestigungselement eine geringere Härte als der übrige Lagerring aufweist. Die dazugehörigen Vorteile wurden bereits vorstehend genannt.

Schließlich geht aus Anspruch 4 hervor, dass das ringförmige Teil und das andere zugehörige Teil des Lagerringes aus einem durchhärtbaren Material, beispielsweise aus einem Stahl der Marke 100 Cr6 bestehen. Dieser Stahl mit 0,9 bis 1,05 % C, 0,15 bis 0,35 % Si, 0,25 bis 0,45 % Mn, 0 bis 0,030 % P, 0 bis 0,025 % S, 1,35 bis 1.65 % Cr und 0 bis 0,30 % Ni ist als durchhärtender klassischer Wälzlagerstahl seit seiner Beschreibung durch Striebeck um die Jahrhundertwende nahezu unverändert erfolgreich angewendet worden. Die Durchhärtung hat den Vorteil, dass das Umwandlungshärten über den gesamten Ringquerschnitt erfolgt.

### Kurze Beschreibung der Zeichnungen

Weitere Merkmale der Erfindung ergeben sich aus der nachfolgenden Beschreibung und aus der Zeichnung, in der Ausführungsbeispiele der Erfindung vereinfacht dargestellt sind.

Es zeigt:
- Figur 1: eine perspektivische Schnittdarstellung eines Wälzlagers mit einem erfindungsgemäßen Gewindeteil, das als ein Ring ausgebildet ist.

### Ausführliche Beschreibung der Zeichnungen

In der Figur 1 ist beispielhaft für ein beliebiges Wälzlager ein doppelreihiges Kegelrollenlager 1 gezeigt, dessen Kegelrollen 2, 3 in je einem Käfig 4, 5 geführt sind und unter einem Winkel geneigt zu einer Lagerachse angeordnet sind. Der Lagerinnenring 6 ist durch zwei Teilringe 7, 8 gebildet, zwischen denen ein Distanzring 9 angeordnet ist, wobei die Laufbahnen 16, 17 durch die Teilringe 7, 8 gestellt sind. Der Lageraußenring 10 besteht aus dem die Laufbahnen 11,12 tragenden ringförmigen Teil 13 und dem Teil 14, das eine Aufnahmeöffnung 15 für eine nicht dargestellte Befestigungsschraube an einer ebenfalls nicht dargestellten Anschlußkonstruktion aufweist, wobei das ringförmige Teil 13 und das andere Teil 14 einstückig miteinander verbunden sind, und aus einem Ring 21.

Beim Kegelrollenlager 1 nach Figur 1 ist das Teil 14 zum Teil 13 des Lageraußenringes 10 flanschartig radial nach außen liegend angeordnet, so dass zwischen beiden die Stufe 20 gebildet ist. Auf dieser Stufe 20 ist der Ring 21 angeordnet, der mit seiner inneren Mantelfläche das ringförmige Teil 13 konzentrisch umfasst. An wenigstens einer Umfangsstelle weist der Ring 21 eine Bohrung 22 auf, die mit der Aufnahmeöffnung 15 des Lageraußenringes 10 in axialer Richtung fluchtet. Die Bohrung 22 des Ringes 21 ist mit dem Gewindeteil 23 versehen, das logischerweise ebenfalls mit der Aufnahmeöffnung 15 in einer Flucht liegt. Die Figur läßt deutlich erkennen, dass beim Kegelrollenlager 1 die Funktionen zwischen den Teilen 13 und 14 und dem Befestigungselement in Form des Ringes 21 eindeutig getrennt sind. Somit ist es in einfacher Weise möglich, dem ringförmigen Teil 13 mit den Laufbahnen 11, 12 durch eine entsprechende Härtebehandlung eine ausreichende Festigkeit zu geben, während der der Befestigung dienende Ring 21 aus einem anderem Werkstoff gefertigt sein kann, der keiner Härtebehandlung unterworfen zu werden braucht. Dadurch ist sichergestellt, dass das Gewindeteil 23 in der Bohrung 22 keinen qualitätsmindernden Verzügen bzw. Härterissen ausgesetzt ist. Die Fixierung des Kegelrollenlagers 1 an einer nicht dargestellten Anschlußkonstruktion erfolgt derart, dass eine ebenfalls nicht gezeichnete Befestigungsschraube über die Aufnahmeöffnung 15 in das Gewindeteil 23 des Ringes 21 eingeschraubt wird. Die erfindungsgemäße Anordnung des Lagerrings 10 ist besonders dann vorteilhaft anwendbar, wenn der Lagerring 10 direkt an einer Anschlusskonstruktion zu befestigen ist.

### Bezugszahlenliste

- 1: Kegelrollenlager
- 2: Kegelrolle
- 3: Kegelrolle
- 4: Käfig
- 5: Käfig
- 6: Lagerinnenring
- 7: Teilring
- 8: Teilring
- 9: Distanzring
- 10: Lageraußenring
- 11: Laufbahn
- 12: Laufbahn
- 13: ringförmiges Teil
- 14: Teil
- 15: Aufnahmeöffnung
- 16: Laufbahn
- 17: Laufbahn
- 18: Kegelrollenlager
- 19: Kegelrollenlager
- 20: Stufe
- 21: Ring
- 22: Bohrung
- 23: Gewindeteil
- 24: Gewindeeinsatz
- 25: Schaft
- 26: Aufnahmebohrung
- 27: Kopf
- 28: Aufnahmeöffnung
- 29: prismatischer Körper

## Patentansprüche

1. Lagerring (10) für ein Wälzlager (1, 18, 19) aus einem Wälzlagerstahl mit einem ringförmigen Teil (13), das zumindest eine Laufbahn (11, 12) für zugehörige Wälzkörper (2, 3) aufweist, wenigstens einem zugehörigen Teil (14), das eine Aufnahmeöffnung (15) besitzt, sowie einem Gewindeteil (23) für eine Befestigungsschraube zum Fixieren an einer Anschlusskonstruktion, wobei der Lagerring (10) mehrteilig ausgebildet ist, und wobei das Gewindeteil (23) von einem getrennt hergestellten Befestigungselement gestellt ist, dessen das Gewindeteil (23) tragende Bohrung (22) mit der Aufnahmeöffnung (15) fluchtet, **dadurch gekennzeichnet, dass** das Gewindeteil (23) Bestandteil eines Ringes (21) ist, der mit seiner kompletten inneren Mantelfläche auf dem ringförmigen Teil (13) angeordnet ist.

2. Lagerring (10) nach Anspruch 1, **dadurch gekennzeichnet, dass** das Befestigungselement eine geringere Härte als der übrige Lagerring (10) aufweist.

3. Lagerring (10) nach Anspruch 1, **dadurch gekennzeichnet, dass** der Ring (21) das ringförmige Teil (13) mit seiner inneren Mantelfläche konzentrisch umfasst.

4. Lagerring (10) nach Anspruch 1, **dadurch gekennzeichnet, dass** das ringförmige Teil (13) und das zugehörige Teil (14) aus einem durchhärtbaren Material, beispielsweise aus einem Stahl der Marke 100 Cr 6, gefertigt sind.

## Claims

1. Bearing ring (10) for a rolling bearing (1, 18, 19) composed of a rolling bearing steel, having an annular part (13) which has at least one raceway (11, 12) for associated rolling bodies (2, 3), having at least one associated part (14) which has a holding opening (15), and having a threaded part (23) for a fastening screw for fixing to an attachment structure, with the bearing ring (10) being of multi-part design, and with the threaded part (23) being provided by a separately-produced fastening element whose bore (22) which bears the threaded part (23) is aligned with the holding opening (15), **characterized in that** the threaded part (23) is a constituent part of a ring (21) which is arranged with its entire inner lateral surface on the annular part (13).

2. Bearing ring (10) according to Claim 1, **characterized in that** the fastening element has a lower hardness than the rest of the bearing ring (10).

3. Bearing ring (10) according to Claim 1, **characterized in that** the ring (21), with its inner lateral surface, concentrically encompasses the annular part (13).

4. Bearing ring (10) according to Claim 1, **characterized in that** the annular part (13) and the associated part (14) are produced from a through-hardenable material, for example from a steel of type 100 Cr 6.

## Revendications

1. Bague de roulement (10) pour un palier à roulement (1, 18, 19) constituée d'acier pour palier à roulement avec une partie annulaire (13), qui présente au moins une piste de roulement (11, 12) pour des corps de roulement associés (2, 3), au moins une partie associée (14) qui possède une ouverture de réception (15), ainsi qu'une partie filetée (23) pour une vis de fixation pour la fixation à une construction de raccordement, la bague de roulement (10) étant réalisée en plusieurs parties, et la partie filetée (23) étant réalisée par un élément de fixation créé séparément, dont l'alésage (22) portant la partie filetée (23) est aligné avec l'ouverture de réception (15), **caractérisée en ce que** la partie filetée (23) fait partie d'une bague (21) qui est disposée avec sa surface d'enveloppe interne complète sur la partie annulaire (13).

2. Bague de roulement (10) selon la revendication 1, **caractérisée en ce que** l'élément de fixation présente une plus faible dureté que le reste de la bague de roulement (10).

3. Bague de roulement (10) selon la revendication 1, **caractérisée en ce que** la bague (21) entoure la partie annulaire (13) concentriquement avec sa surface d'enveloppe interne.

4. Bague de roulement (10) selon la revendication 1, **caractérisée en ce que** la partie annulaire (13) et la partie associée (14) se composent d'un matériau durcissable, par exemple d'un acier de marque 100 Cr 6.
